# EUROPEAN PATENT SPECIFICATION

(11) **EP 2 661 109 B1**
(45) Date of publication and mention of the grant of the patent: **03.07.2019**
(21) Application number: 13275105.8
(22) Date of filing: 01.05.2013
(51) Int. Cl.: H04W 8/12, H04W 8/06, H04W 88/16

(54) **Gateway location register**
Gateway-Standortregister
Registre d'emplacement de passerelle

(30) Priority: 01.05.2012 GB 201207547
(43) Date of publication of application: 06.11.2013
(73) Proprietor: Vodafone IP Licensing Limited, Newbury, Berkshire RG14 2FN (GB)
(72) Inventor: Sutherns, Timothy, Newbury, Berkshire RG14 2FN (GB); Hodgkinson, David, Newbury, Berkshire RG14 2FN (GB)
(74) Representative: Boult Wade Tennant LLP

(56) References cited:
- EP-A1- 1 821 566
- EP-A2- 1 739 996
- WO-A2-2006/099388
- US-A1- 2007 173 252
- US-A1- 2008 020 760
- "3rd Generation Partnership Project; Technical Specification Group Core Network; Technical report on the Gateway Location Register (Release 4)", 3GPP STANDARD; 3GPP TR 23.909, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V4.0.0, 1 March 2001 (2001-03-01), pages 1-58, XP050364207,

## Description

### Technical Field of the Invention

The present invention concerns a Gateway Location Register (GLR) for a Public Land Mobile Network (PLMN) or a method of operating such a GLR.

### Background to the Invention

Within cellular networks, especially those specified under the Third Generation Partnership Project (3GPP) and its predecessors, each user is provided with a subscription by a Public Land Mobile Network (PLMN) and this PLMN is referred to as that subscriber's Home PLMN (HPLMN). Nevertheless, it is often desirable that the user be able to access another PLMN, especially when it is geographically located in an area outside the coverage of its HPLMN. This is known as roaming and the other PLMN is termed the Visited PLMN (VPLMN).

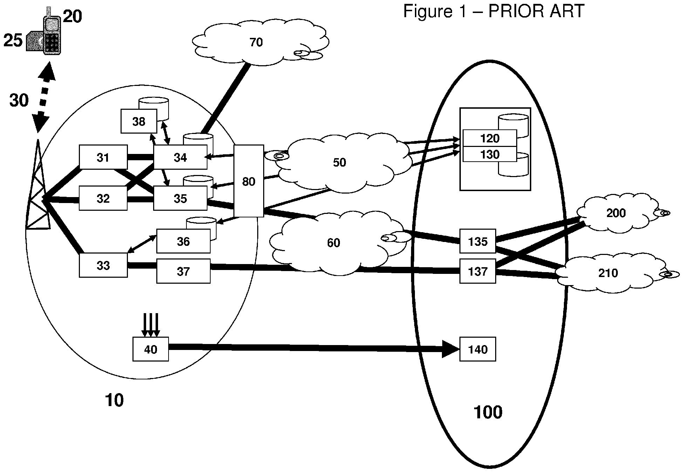

A simplified existing network architecture to support roaming in a Universal Mobile Telecommunications System (UMTS) and/or Long Term Evolution (LTE) system is shown in Figure 1. In this architecture, a Mobile Subscriber (MS) consists of a User Equipment (UE) 20 and a Subscriber Identity Module (SIM) 25 issued by an HPLMN 100. The MS then roams in a VPLMN 10. The MS communicates with the VPLMN using the air interface 30. The VPLMN 10 may provide more than one Radio Access Network (RAN). For example, a GERAN 31, UTRAN 32 and E-UTRAN 33 Radio Access Technology (RAT) may be available. Entities of the GERAN RAT 31 and UTRAN RAT 32 interface with an Visitor Location Register (VLR) 34 (which may be part of a Mobile Switching Centre, MSC) and a Serving GPRS Support Node (SGSN) 35. The E-UTRAN RAT 33 interfaces with a Mobility Management Entity (MME) 36 and Serving Gateway (S-GW) 37.

If the identity of the VPLMN 10 being transmitted by its RAN is acceptable to the configuration on the SIM 25, the UE 20 will request to register on the VPLMN 10 according to procedures defined by 3GPP. Subject to local requirements, the VPLMN 10 may perform a check of the UE identity (specified by the International Mobile Equipment Identity, IMEI) against a UE blacklist in an EIR database 38. Devices on the blacklist are blocked access to prevent their continued use.

The SIM 25 comprises an indicator, known as the International Mobile Subscriber Identity (IMSI), which is transmitted to the VPLMN 10 and identifies the HPLMN 100. If the VPLMN 10 and HPLMN 100 have a "roaming agreement" (a set of technical and commercial arrangements), then the VPLMN 10 will forward messages to the HPLMN 100 over an international signalling network (a Signalling Connection Control Part, SCCP, interconnect 50) to enable the authentication of the SIM 25 and subsequent registration in databases in both networks. For the LTE RAN, the VPLMN 10 uses a similar S6 interface, instead of SCCP, to signal the HPLMN 100 to the same effect.

In the HPLMN 100, a Home Location Register (HLR) 120 records the location of the MS as the identities of the relevant VLR 34, SGSN 35 and MME 36. Each of the MSC/VLR 34, SGSN 35 and MME 36 in the VPLMN 10 record the identity of the hosting HLR 120 in respect of that MS. The HLR 120 sends to the VLR 34, SGSN 35 and/or MME 36 a list of services that the MS is permitted to use in that VPLMN 10. Another system within the HPLMN 100, the Short Message Service Centre (SMSC) 130 interfaces with the VLR 34, SGSN 35 and MME 36. over the SCCP interconnect 50 to handle the Short Message Service.

As the MS generates chargeable events, for instance, making or receive a call, SMS or sending packet-switched (PS) data, the VPLMN 10 infrastructure generates event records. These are collected and processed by the billing system 40 of the VPLMN 10. Those relating to roaming subscribers are then interchanged with the billing system 140 of the HPLMN 100. This interchange of billing events uses an agreed format called Transferred Account Procedure (TAP).

Voice calls are generally routed by the VPLMN 10 to the Public Switched Telephony Network (PSTN) or worldwide interconnection through a voice interconnection 70, while data sessions are typically routed to the HPLMN 100 over a data network 60 maintained by mobile operators for this purpose (GRX). The HPLMN 100 then routes the data to the Internet 200 or possibly over a private connection to a corporate Local Area Network 210. SMS messages are sent over the SCCP Interconnect 50 to the SMSC 130.

The exchange of signalling messages between the VPLMN 10 and HPLMN 100 over the SCCP interconnect 50 can be complex and costly, especially where the VPLMN 10 and HPLMN 100 are in different countries. In a desire to reduce the frequency of signalling, a further network entity called a Gateway Location Register (GLR) 80 has been introduced as part of the 3GPP architecture. The details of the GLR 80 are explained in 3GPP specifications TS 23.119 and TS 29.120. The GLR 80 intercepts all signalling between the databases of the VPLMN 10 (VLR 34, SGSN 35, MME 36) and the HLR 120 of the HPLMN 100 and acts as a proxy between the two PLMNs. Using the GLR 80, the HPLMN 100 does not communicate with any of the VLR 34, SGSN 35 or MME 36 directly, but rather with the GLR 80. The GLR registers all of the subscribers roaming within the PLMN. Similarly, the VLR 34, SGSN 35 and MME 36 no longer communicates directly with the HLR 120 in the HPLMN 100. Since different roaming subscribers in the VPLMN 10 would likely have different HPLMN 100, these entities in the VPLMN 10 would have normally communicated with a range of different HPLMN 100. As far as the entities of the VPLMN 10 are concerned, all roaming MS are registered with the GLR 80 instead.

A beneficial effect of the GLR 80 is to reduce the need for signalling between the VPLMN 10 and HPLMN 100. As the MS moves from one area of coverage to another, inter-VLR, inter-SGSN and inter-MME signalling would normally be required, together with updates to the HLR 120. Using the GLR 80, this signalling by the VPLMN 10 and HPLMN 100 is not necessary and is contained within the VPLMN 10. The GLR 80 only reduces signalling associated with mobility, but not authentication or for establishment and termination of a PS data session.

Nevertheless, the GLR can improve the efficient operation of a network acting as a VPLMN. Improving these efficiency gains, particularly with anticipated increases in the number of roaming mobile subscribers is an on-going challenge for network designers and operators.

US-2008/020760 describes a GLR providing a proxy for visitor location registers to the home location registers, to avoid updating of the external network with the location update notifications upon transfer of a roaming user between visitor locations registers.

EP-1739996 describes generating a location registration request for updating the location of a user equipment and receiving a broadcast message from a cellular communication network. The broadcast message includes information for indicating subscribers allowed or not allowed to roam in the cellular communication network.

### Summary of the Invention

The invention is defined in the appended set of claims. The embodiments and/or examples of the following description which are not covered by the appended claims are considered as not being part of the present invention.

Against this background and in a first aspect, the present invention provides a Gateway Location Register (GLR) for a Public Land Mobile Network (PLMN) in accordance with claim 1. This is arranged to store information relating to each mobile subscriber roaming in
the PLMN. The GLR is configured to receive a request from a visitor registration entity of the PLMN in respect of one Mobile subscriber and to perform an action based on the stored information relating to a plurality of Mobile subscribers in response to the received request.

Thus, the GLR acts in response to a request relating to one mobile subscriber, but bases its action on the entries relating to multiple mobile subscribers. This is especially beneficial for dealing with issues or problems caused by specific groups of mobile subscribers. The mobile subscriber is beneficially identified by a unique International Mobile Subscriber Identity (IMSI). Advantageously, the action is based only on the stored information relating to a plurality of Mobile subscribers currently roaming in the PLMN.

There is normally one logical GLR device (that is an entity providing GLR functionality) per VPLMN. However, this entity may be implemented using multiple, perhaps geographically-separated servers, with and load balancing, fault tolerance or both internally. As an example, there may be several GLR servers, with roaming MS from a European HPLMN having entries on a first GLR server, while roaming MS from Asia or America use a second GLR server. In all cases, the separate servers could each individually be considered a GLR. Alternatively, the composite of the servers could be considered a GLR.

Preferably, the visitor registration entity of the PLMN in respect of one Mobile subscriber is a VLR, SGSN or both associated with the one Mobile subscriber. This is true for existing GERAN and UTRAN-based networks. In Long Term Evolution (LTE) systems, the visitor registration entity may be a Mobility Management Entity (MME) or SGSN associated with the one Mobile subscriber. Although the message names and low level protocols are slightly different in LTE systems, they perform the same roles as for GSM and UMTS systems over SCCP.

The Visitor Location Register (VLR) and Serving GPRS Support Node (SGSN) are databases of limited size, intended for speedy access by the RAN by all users of the PLMN. There are typically multiple VLR and SGSN entities for a network. In contrast, the GLR is a Core Network entity designed for network-wide use solely by roaming subscribers. The cost for a VLR or SGSN of a fixed size is therefore much greater than the cost for a GLR of the same size. A GLR can therefore provide analytical functionality that would not be possible with a VLR or SGSN. Analytical functionality for the subscribers of a PLMN can be carried out using its HLR. It has surprisingly been recognised that the GLR can now provide similar functionality for roaming users of the PLMN.

Roaming agreements between network operators have been required to allow subscribers of a PLMN in one country to use a PLMN in another. To an extent, these are based on reciprocity. It is understood that that the number of roaming users accessing a PLMN in a first country, but from a PLMN in a second country, will be quantifiable. Firstly, they will be small in comparison with the subscribers accessing the PLMN in the first country as their HPLMN. Moreover, they will be similar in number to the roaming users from the PLMN in the first country roaming in the PLMN in the second country.

The development of machine-to-Machine (M2M) devices changes this position significantly. These devices often send and receive a very small quantity of circuit-switched or packet-switched data, but are nevertheless camped on a cellular network. These devices are issued with a SIM by a cellular network. Where they are camped on the same cellular network, that is on their HPLMN, the cellular network can plan its network accordingly in terms of entity sizing, coverage provision and similar requirements.

However, this is not possible for a cellular network acting as a VPLMN for a large number of roaming M2M devices. Such a cellular network may only realise that there is a problem once it is too late to fix. A GLR in accordance with the present invention can act at least as an early warning system, but there is the potential for the GLR to be even more than this, as will be explained below.

In a second aspect, the present invention may be found in a Gateway Location Register (GLR) for a Public Land Mobile Network (PLMN), in line with claim 2. This is arranged to store information relating to each mobile subscriber roaming in the PLMN. The GLR is configured to select at least one Mobile subscriber currently roaming in the PLMN and to perform an action for one or more selected Mobile subscriber. The selection is made on the basis of one or more of: the Home PLMN for the Mobile subscriber; the device type for the User Equipment (UE) device of the mobile subscriber; and one or more statistics relating to messages between a visitor registration entity of the PLMN associated with each Mobile subscriber and the GLR. The action comprises sending a message to a visitor registration entity of the PLMN associated with each selected mobile subscriber.

Alternatively, the action is performed in response to a request received from an associated visitor registration entity of the PLMN in respect of a selected mobile subscriber. Alternatively, it could be understood that the action carried out for the selected mobile subscribers is different from an action taken by the GLR for non-selected mobile subscribers. Advantageously, the selection is of at least one Mobile subscriber currently roaming in the PLMN for which it has stored information.

Existing GLR devices may be set up to produce a report on Mobile subscribers in response to an operator request. Moreover, they may send messages to a visitor registration entity of the PLMN for selected mobile subscribers, where that selection is based on requests received from the visitor registration entity in connection with those mobile subscribers. Selecting mobile subscribers on the basis of anything else and then sending a message to visitor registration entity of the PLMN for selected mobile subscribers or carrying out specific functionality in response to a request from a visitor registration entity of the PLMN for one or more selected mobile subscribers has not previously been considered advantageous.

In this aspect, it will be noted that it is not necessary for the action of the GLR to be prompted by a request from a visitor registration entity. In particular, the selection is optionally independent from any requests received at the GLR from the respective visitor registration entity. Rather, the GLR may select mobile subscribers according to their subscriber information or their activity on the cellular network. This can be used by the GLR to identify mobile subscribers that may be causing or about to cause issues and act to address or mitigate these issues. Specific examples of this behaviour will be discussed below.

Optionally, the one or more statistics relating to messages between a visitor registration entity of the PLMN associated with each Mobile subscriber and the GLR may be any one or combination of: the number of messages; frequency of messages; type of messages; and content of messages. Statistics are optionally based on one message between the Mobile subscriber and the GLR.

Although the action is carried out in respect of one or more selected Mobile subscriber, it may also be performed in respect of other mobile subscribers as well. Moreover, although the action may comprise sending a message to a visitor registration entity, it may further comprise other features, for example generation of a report.

The GLR in this aspect may be further configured to perform the action in response to a request from an associated visitor registration entity of the PLMN. Then, the action may be performed based on the stored information relating to a plurality of Mobile subscribers. In other words, the GLR of the second aspect may be additionally configured to include the functionality of the first aspect of the invention as well.

In both aspects, the action is performed when a number of Mobile subscribers about which information is stored in the GLR is at least a threshold value. In other words, a number of roaming mobile subscribers across the cellular network is counted and the action is performed when this reaches a predetermined level.

The stored information relating to each Mobile subscriber comprises a device type identifier. Then, the GLR is further configured to determine the total number of Mobile subscribers: about which information is stored in the GLR; and for which a comparison between the stored device type identifier and one or more specified device types yields a specified result. In other words, the GLR can determine a number of Mobile subscribers based on their device type. The action may subsequently be performed when the determined total number of Mobile subscribers is at least the threshold value.

The number may then be the total number of devices having a specific device type, or the total number of devices from a group of specific device types (for example, the total number of smart-phones). In preferred embodiments, the one or more specified device types comprise a Machine to Machine, M2M, or Machine Type Communication, MTC, device type.

Beneficially, the device type identifier may be determined using an International Mobile Equipment Identity, (IMEI) for the Mobile subscriber. Alternatively, the IMEI Software Version (IMEISV) may be used. The device type may comprise a category of devices, a specific manufacturer and/or model, a specific operating system or a combination of these characteristics. The device type identifier may be made available to the GLR in the existing signalling by means of the 3GPP Automatic Device Detection (ADD) feature.

A number of optional features may be provided in connection with the GLR in accordance with either aspect. These will now be discussed.

As discussed above, the action may be prompted by a request from received at the GLR from a visitor registration entity or it may be independent from any such request. Either way, the action may be prompted by an additional cause. In other words, even if a request prompts the action, this may be occur when other conditions have also been met. Some of these will now be described.

In some embodiments, the total number of Mobile subscribers from all PLMNs that are currently roaming in the cellular network can be determined. This is particularly advantageous for dealing with situations where a large number of mobile subscribers (possibly, M2M devices) begin roaming on the cellular network. Additionally or alternatively, a large number of mobile subscribers having the same HPLMN may simultaneously try to carry out the same operation. For example, they may all try to send an SMS at the same time. This may result in the visitor registration entities associated with each of these mobile subscribers sending requests for the same HPLMN Short Message Service Centre (SMSC) simultaneously. The GLR can therefore identify this spike in request traffic and act accordingly to report, control or reduce the problem. Without this development, the spike in traffic may be sufficient to cause severe problems with the GLR control of inter-PLMN signalling.

In a similar approach, the GLR may be further configured to determine the total number of Mobile subscribers about which information is stored in the GLR from at least one other specific PLMN. Then, the action may be performed when the determined total number of Mobile subscribers is at least the threshold value. Hence, the GLR can establish how many Mobile subscribers are roaming on its cellular network that have a specific HPLMN. When that number reaches a predetermined level, a pre-emptive, corrective or controlling action can be taken. This could be particularly advantageous for addressing a large number of roaming M2M devices originating from a specific PLMN.

The threshold values for each PLMN may be set individually. In other words, the GLR may be further configured to determine a first number of Mobile subscribers about which information is stored in the GLR from a first other PLMN and to determine a second number of Mobile subscribers about which information is stored in the GLR from a second other PLMN. Then, the action may be performed when the determined first number of Mobile subscribers is at least a first threshold value or when the determined second number of Mobile subscribers is at least a second threshold value or both. The first threshold value may be different from the second threshold value.

In a further advantageous embodiment, the GLR may be further configured to determine the total number of Mobile subscribers about which information is stored in the GLR a plurality of other specific PLMNs. In other words, the total number of from mobile subscribers originating from a group of specific PLMNs may be determined. The plurality of other specific PLMNs may be selected according to their country. For instance, this may allow the GLR to determine the number of mobile subscribers roaming from all the PLMNs in a specific country or group of countries.

Advantageously, the GLR may be further configured to receive from the Home Location Register (HLR) of the PLMN, a number of Mobile subscribers from the PLMN that are roaming in the at least one other specific PLMN. The GLR may then determine the threshold value on the basis of said number of Mobile subscribers from the PLMN that are roaming in the at least one other specific PLMN. In other words, the GLR sets the threshold value for the PLMN based on the number of its own subscribers roaming in that PLMN. This may allow reciprocity arrangements in roaming agreements to be monitored and controlled.

In preferred embodiments, the action comprises sending an instruction to a visitor registration entity associated with a mobile subscriber. In other words, the message to the visitor registration entity is preferably an instruction. When the action is prompted by a request from the associated visitor registration entity, that request optionally comprises a request to update location information in respect of the one Mobile subscriber. In such cases, the instruction to the associated visitor registration entity advantageously comprises a message refusing the request. Optionally, the message refusing the request is an error message. In the second aspect of the invention, in which the GLR selects Mobile subscribers and performs the action in respect of the selected devices, the action optionally comprises sending an instruction to the respective visitor registration entity associated with each selected Mobile subscriber, to deregister the respective Mobile subscriber.

In many embodiments, the action may comprise sending an instruction to each Home Location Register (HLR) of at least one other PLMN. For embodiments according to the first aspect, the HLR may be the HLR associated with the one mobile subscriber in respect of which the request was received. For embodiments according to the second aspect, the HLR may be the respective HLR associated with each selected mobile subscriber.

In another advantageous embodiment, the action may comprise generating a report. Existing GLR devices can be set up to generate reports. However, the need for a report to be generated about multiple mobile subscribers upon receipt of a request in relation to one mobile subscriber has never been thought useful. Surprisingly, this can be especially useful for identifying problems occurring with large numbers of mobile subscribers at an early stage. It may be especially advantageous to identify the number of simultaneous roaming stations from each PLMN at a certain point in time. It is also possible to identify the number of unique IMSI seen from that PLMN over some predefined period.

In other embodiments, the action may comprise limiting the transmission of signalling from the GLR. For embodiments according to the second aspect, the limiting of signalling may be in respect of the selected Mobile subscribers. Optionally, the limiting applies only to signalling comprising a specified message type. For example, this may be signalling relating to specific traffic, such as SMS messages. Advantageously, the message type may comprise those considered excessive or inappropriate to normal roaming purposes. The limiting may be optionally applied to multiple message types. Beneficially, the limiting comprises one or more of: blocking signalling messages; capping the number of signalling messages that may be sent within a predetermined time period; and limiting the rate of transmission of signalling messages.

Advantageously, the limiting may be applied to the transmission of signalling from the GLR for a plurality of Mobile subscribers. For example, the limiting may be applied to each selected Mobile subscriber in embodiments in accordance with the second aspect of the invention. Moreover, the limiting may be applied differently in respect of each of the plurality of Mobile subscribers. The limiting may be applied in respect of each Mobile subscriber based on the respective Mobile subscriber's: HPLMN; device type; and signalling traffic profile; or any combination of these factors.

In some embodiments, a first limiting is applied only to signalling from the PLMN to at least one other first PLMN. Optionally, a second limiting is applied only to signalling from the PLMN to at least one other second PLMN. The first limiting may define a first limit in rate of signalling messages and the second limiting may define a second limit in rate of signalling messages. The at least one other first PLMN, the at least one other second PLMN or both may be determined based on the stored information for the one Mobile subscriber or the selected Mobile subscribers.

Optionally, the limiting may be applied to the transmission of signalling from the GLR for Mobile subscribers originating from a specific PLMN. Alternatively, the limiting may be applied to the transmission of signalling from the GLR for Mobile subscribers originating from a plurality of specific PLMNs. The plurality of specific PLMNs may be selected from the same country.

In another embodiment, the action comprises generating a charging message.

In an example, there may be provided a method of operating a Gateway Location Register (GLR) for a Public Land Mobile Network (PLMN), comprising: storing information relating to each mobile subscriber roaming in the PLMN; receiving a request from a visitor registration entity of the PLMN in respect of one Mobile subscriber; and performing an action based on the stored information relating to a plurality of Mobile subscribers in response to the received request.

In a further example, there may considered a method of operating a Gateway Location Register (GLR) for a Public Land Mobile Network (PLMN), comprising: storing information relating to each mobile subscriber roaming in the PLMN; selecting at least one Mobile subscriber for which it has stored information; and performing an action for each selected Mobile subscriber. The action comprises sending a message to a visitor registration entity of the PLMN associated with each selected Mobile subscriber and the selection is made on the basis of one or more of: the Home PLMN for the Mobile subscriber; the device type for the
Mobile subscriber; and one or more statistics relating to messages between a visitor registration entity of the PLMN associated with each Mobile subscriber and the GLR.

It will be understood that either or both of these methods can optionally comprise steps or features used to carry out any of the actions described in connection with the GLR detailed above. Also, any combination of the individual apparatus features or method features described may be implemented, even though not explicitly disclosed.

In a yet further example, there may be considered a computer program, configured when operated by a processor to carry out any of the methods described herein. Alternatively, there may be considered in programmable logic, configured upon operation to carry out any of the methods described herein.

There is in another example provided a Gateway Location Register (GLR) for a Public Land Mobile Network (PLMN) arranged to store information relating to each mobile subscriber roaming in the PLMN. The GLR is configured to generate a charging message based on the stored information. Generating billing event messages at the GLR advantageously allows charging to be based on parameters not available in parts of the RAN, such as the MSC or SGSN. This may be useful for devices that use significant resources of the PLMN, but which do not carry out events that existing network architecture is designed to identify as significant, such as M2M devices for the reasons explained above.

In a yet further example, there may be provided a Gateway Location Register (GLR) for a Public Land Mobile Network (PLMN), arranged to store information relating to each mobile subscriber currently roaming in the PLMN and to store information relating to at least one mobile subscriber that has previously roamed in the PLMN. The at least one mobile subscriber that has previously roamed in the PLMN is not currently roaming in the PLMN. Preferably, the GLR is arranged to store information relating to a plurality of mobile subscribers that have previously roamed in the PLMN. More preferably, the GLR is arranged to store information relating to all mobile subscribers that have previously roamed in the PLMN within a predefined time period. For example, the predefined time period may be a number of weeks (such as 1, 2, 3 or 4) or months (such as 1, 2, 3, 4, 5, 6, 7, 8, 9, 10 or 11) or years (such as 1, 2, 3, 4, 5, 6 or more).

Existing GLR devices do not retain any database entry for a roaming IMSI once the SIM registers elsewhere (or is disconnected by its HPLMN) and the HPLMN HLR sends a CancelLocation message to the GLR. Known GLR databases only hold IMSI details for mobile subscribers currently roaming in the VPLMN.

Advantageously, the GLR is further arranged to store the time of departure from the PLMN for the at least one mobile subscriber that has previously roamed in the PLMN. The time preferably comprises at least a date and may also comprise a time.

This example, in any of its forms, may be combined with any aspect of the invention. It is may also be implemented as a method of operating a GLR. Again, any combination of the individual apparatus features or method features described in respect of any aspect may be implemented, even though not explicitly disclosed. This includes combining features across different aspects.

It is also observed that the present invention is not necessarily reliant upon the ability of the GLR to delay the
onward transmission of messages between the PLMN it serves to act as VPLMN and any other PLMN acting as HPLMN. Although this functionality, which is essentially the action of a proxy server, is a key feature of existing GLR devices, the present invention does not require this functionality. Nevertheless, a device in accordance with the invention is termed a GLR in view of its position within the network architecture. Such a device need not necessarily be referred to as a GLR in future network architectures though.

### Brief Description of the Drawings

The invention may be put into practice in various ways, one of which will now be described by way of example only and with reference to the accompanying drawings in which:
Figure 1 shows a simplified existing network architecture to support roaming in a Universal Mobile Telecommunications System (UMTS) and/or Long Term Evolution (LTE) system comprising a Gateway Location Register (GLR);
Figure 2 illustrates examples of existing communication flows between the GLR and other entities of the architecture shown in Figure 1; and
Figure 3 depicts a method of operating the GLR of Figures 1 and 2 in accordance with the invention.

### Detailed Description of a Preferred Embodiment

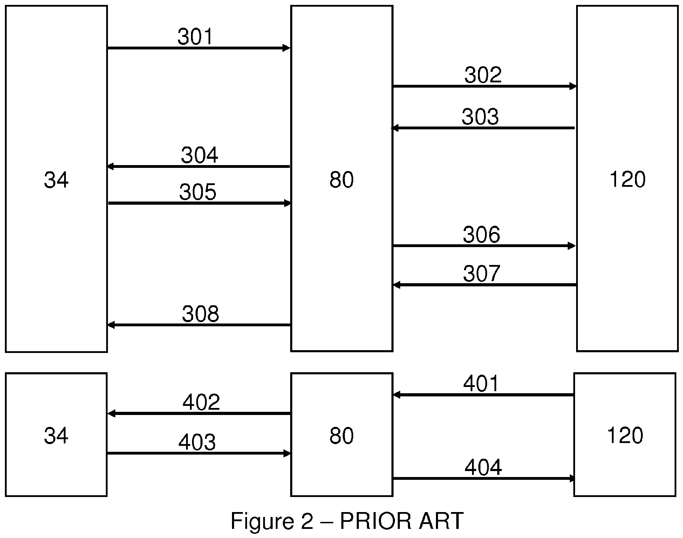

In order to describe the invention, further details regarding the operation of an existing GLR 80 are potentially beneficial. Referring therefore to Figure 2, there are illustrated examples of existing communication flows between the GLR 80 and other entities of the architecture shown in Figure 1. Specifically, flows are shown between the VLR 34 and GLR 80 and between the GLR 80 and HLR 120.

The GLR 80 maintains a real-time database for every roaming IMSI seen in the VPLMN 10. This data will hold as a minimum: IMSI; HLR identity; and VLR identity and/or SGSN identity. The IMEI software version (IMEISV) may optionally be held as well. The database is indexed by IMSI. Whenever the GLR 80 passes a successful location updating message (UpdateLocation, UpdateLocationGPRS or S6 equivalent) for an IMSI it does not currently hold in this database, it creates an entry for that IMSI and updates the HLR 120 and VLR 34 or SGSN 35 appropriately. Whenever the GLR 80 passes a successful location cancelling message (CancelLocation or S6 equivalent) from a VLR 34, it will remove the VLR identity. If passing a CancelLocation from an SGSN 35, it will remove the SGSN identity. If both VLR 34 and SGSN 35 identities are now absent from the entry, the GLR 80 can remove the whole entry for that IMSI. These procedures will be discussed below.

In order to update the location information for a UE 20 with HLR 120, the VLR 34 firstly sends an UpdateLocation message 301 to GLR 80. The GLR 80 then passes on the UpdateLocation message 302 to HLR 120. The HLR 120 sends an InsertSubData message 303 to the GLR 80. The GLR 80 then sends the InsertSubData message 304 to the VLR 34. The VLR 34 responds with an InsertSubData result message 305. The GLR 80 sends the InsertSubData result message 306 to the HLR 120. The HLR 120 then responds with a UpdateLocation result message 307 to GLR 80. The GLR 80 then sends the UpdateLocation message 308 to the VLR 34.

It will be understood that there may be a delay between message 301 and exchange of messages of 302 and 303, between message 303 and the exchange of messages of 304 and 305, between message 305 and the exchange of messages of 306 and 307 and between message 307 and message 308. Also, there may be more than one InsertSubData and InsertSubData result exchange.

In another exchange of messages, the HLR 120 can send a CancelLocation to the GLR 80. The HLR 120 initiates a CancelLocation message (or S6 equivalent) for one of two reasons. Firstly, the MS may be registering on a new VLR, SGSN or MME (that is, from a different VPLMN), and hence the registration on the old VLR 34 or SGSN 35 or MME 36 is removed. Secondly, the HPLMN 100 may have performed some service level change to the HLR 120 data, for example, disconnecting the subscriber for non-payment or removal of roaming service. This may means that the entry in the current VLR 34 or SGSN 35 or MME 36 is removed. The GLR 80 updates its database accordingly and sends a CancelLocation message 402 to the VLR 34. The VLR 34 responds with a CancelLocation result message 403 to GLR 80. The GLR 80 then sends the CancelLocation result message 404 to the HLR 120.

A similar set of signal exchanges using the UpdateLocationGPRS, InsertSubData and CancelLocation messages is intercepted by the GLR 80 between the SGSN 35 and the HLR 120. Consequently, a detailed discussion of this procedure is omitted for brevity.

Hence, additional benefits of the GLR 80 may include: hiding of the internal architecture of VPLMN 10 from each HPLMN 10; and a reduction in opportunities for the HPLMN to 'steer' the roaming subscriber away from the VPLMN 10 onto another VPLMN they may prefer. Some network operators see these as further desirable advantages of the GLR.

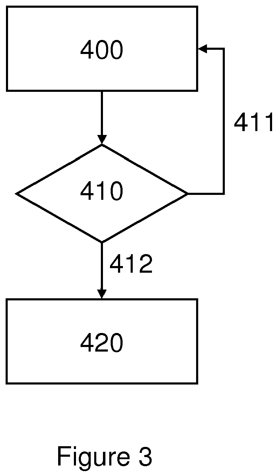

Referring next to Figure 3, there is depicted a method of operating the GLR 80 of Figures 1 and 2 in accordance with the invention. In a first step 400, there occurs a trigger event. This trigger event may be a message from the VLR 34, such as an UpdateLocation message 301. Alternatively, this trigger event may come from the network operator.

In response to the trigger event, the GLR 80 performs a condition test 410. This condition test 410 is optional and specific tests will be discussed below. If the condition test is failed, path 411 is taken and the GLR 80 waits for another trigger event 400.

If the condition test 410 is passed, path 412 is taken and a response action 420 is performed. The response action 420 may be the generation of a report, although it may additionally or alternatively comprise an update of its database in respect of one or more IMSI entries, transmission of a message to a VLR 34 or SGSN 35 or both.

The GLR 80 is effectively a proxy for the location signalling from the VPLMN 10 to each relevant HPLMN 100. Hence, it maintains a persistent view of every inbound roamer's presence in the VPLMN and the time at which this presence commenced. It can record both the start time of this presence and the start time of the first visit of the specific IMSI. Also, the GLR 80 is informed when the UE device associated with that IMSI leaves the VPLMN 10 and registers elsewhere.

This data is an interest in itself as a reporting technique. For example, the GLR can be used to: assess the scale of inbound roaming usage and detect trends that may indicate the need for further action; generate reports based on the duration of visits, looking for persistent or permanent roaming; and cost-referenced reports with those from billing on the revenue generated inbound roamer, looking for excessive numbers of low revenue devices consuming VPLMN resources.

In accordance with the generalised approach described in connection with Figure 3 above, a number of specific functionalities can be implemented. The following functionalities are described as examples only and it will be appreciated that their specific features can be combined, including sub combinations to achieve further functionality.

### Functionality 1

The GLR 80 can impose an upper limit on the total number of inbound roamers, thereby preserving a guaranteed minimum of VPLMN 10 resources for its own customers. This is possibly the most basic of stability preservation requirements. Additional inbound roaming attempts are refused by the GLR 80, acting as if the HLR 120 and the HPLMN 100 has denied that roaming service.

To effect this functionality, the GLR 80 may increment a counter for the total number of roaming IMSI accepted whenever it creates a new IMSI entry. Whenever the GLR 80 removes an IMSI entry it can decrement that counter. This counter will measure the total number of inbound roamers ("total inbound roamers"). When receiving an UpdateLocation or UpdateLocationGPRS message, the GLR 80 will perform a test upon this "total inbound roamers" counter by comparing against configurable thresholds. This is the condition test of step 410 for this functionality.

```
 IF "Total Inbound Roamers" >= "Max Permitted Roamers"
 THEN
      Do not pass UpdateLocation or UpdateLocationGPRS to
      HLR, but reply directly to the VLR/SGSN with an error
      refusing the roaming request. A variety of refusal
      messages can be used, perhaps the most appropriate
      would be a TC-ABORT indicating congestion.
      ELSE
      Perform normal GLR operation as per 3GPP
      ENDIF
```

This mechanism caps the total number of roaming subscribers and ring-fences the remaining in capacity for the VPLMN's own subscribers.

### Functionality 2

The GLR 80 can impose an upper limit on the total number of inbound roamers per PLMN. This preserves a guaranteed minimum of VPLMN resources for the VPLMN's own customers and those of all roaming partners. As with Functionality 1 above, any excess will be refused. The limits can be adjusted to reflect the scale of the various roaming partners. For example, due to population differences, a higher limit might be expected for Germany compared with Malta.

This functionality can be effected in a similar way as above, the difference being that the GLR 80 extracts from the IMSI the leading five digits which comprise the mobile country code (MCC) and mobile network code (MNC). The MCC and MNC is an identifier for the home PLMN of the roamer. The GLR may then keep a set of counters, one for each MCC/MNC combination for which the GLR database is able to hold an entry. This may mean all of those PLMN with which the VPLMN 10 has a roaming agreement. Thus, this is the condition test of step 410 for this functionality.

```
 IF "Inbound Roamers[PLMN]" >= "Max Permitted Roamers[PLMN]"
 THEN
      Do not pass UpdateLocation or UpdateLocationGPRS to
      HLR, but reply directly to the VLR/SGSN with an error
      refusing the roaming request.
      ELSE
      Perform normal GLR operation as per 3GPP
      ENDIF
```

### Functionality 3

The GLR 80 can generate event reports for usage attempts in excess of the limits specified in respect of Functionalities 1 and 2. The operator of the VPLMN 10 can then discuss the nature of the usage with the relevant HPLMN 100. If the HPLMN 100 takes no action, the service of all of their customers roaming to the VPLMN 10 (which may include both M2M and personal devices) may be impaired. This incentivises the HPLMN 100 operator to negotiate a higher limit, while the VPLMN 10 gains the leverage to obtain more equitable recompense if the usage is excessively of low traffic (for example, M2M) devices.

To effect this functionality, the GLR 80 can generate an event log of the HPLMN 100 whose subscribers are being refused service, when the test in Functionality 2 results in a rejection. The GLR 80 can also record all the IMSI of all rejected devices, so that subsequent analysis can determine if the threshold is being marginally exceeded by a few extra subscribers, or significantly breached by large numbers of devices. This may inform the operator VPLMN 10 for discussions with the roaming partner (that is HPLMN 100) on increasing the threshold.

Other types of report can also be generated by the GLR 80. To create further reports, the GLR 80 may be advantageously configured to keep entries for roaming IMSI after they have left the VPLMN, with suitable marking to record the time and date of departure. This could be implemented alone or with other features.

This could be useful information in several ways.
a) It allows historical reports over the total number of unique IMSI seen from each HPLMN over a defined period.
b) Other data mining may assist in trend analysis or incident investigation or commercial negotiations.
c) Upon subsequent return of the same SIM, the information may be used to infer a nomadic behaviour which may alter the allow or block criteria. For example, this information could be used to detect whether a SIM is a genuine personal phone (and therefore not subject to blocking or, conversely, permitted to use full roaming functionality) or an M2M device (and therefore subject to blocking or limiting).

### Functionality 4

The GLR 80 can impose rate limits on signalling emerging from the VPLMN 10, either in aggregate, or on behalf of the roaming devices from each HPLMN 100. Moreover, individual mobile subscribers can also be blocked. Thus the VPLMN 10 can limit the extent of any disruption or Distributed Denial of Service (DDoS) created on their network by the roaming devices and exported to their partners. A DDoS might be initiated by accident, for example when a large number of devices with synchronised clocks are configured to initiate a call, SMS or data transfer at the exact same time.

It should be noted that all signalling generated by a roaming subscriber will pass through the GLR 80, not just the mobility management messages such as UpdateLocation and CancelLocation. Whenever the GLR 80 passes signalling initiated on behalf of a roaming subscriber, the GLR 80 can inspect the message to extract the IMSI and hence the MCC/MNC identifying the HPLMN 100. The GLR 80 can record that a message was passed from the VPLMN 10 to the outside world on behalf of that PLMN to impose a rate limit: for example, to ensure that over the previous minute the subscribers of that PLMN have generated no more than a predetermined number of messages ("Maximum Message Rate[PLMN]") .

```
 IF Maximum Message Rate[PLMN]" >= "Max Permitted Rate[PLMN]"
 THEN
      Discard message and do not onwards transmit or reply.
      ELSE
      Perform normal GLR operation as per 3GPP
      ENDIF
```

This desirably prevents the VPLMN 10 from issuing an excessive rate of messages to its roaming partners and suppliers of interconnect networks as a result of a DDoS breach of the roaming devices, whether intentional or not.

As noted above, discarding the message is one way to implement a limiting process. In fact, the GLR may take three actions:
a) discarding the message without action (the mobile subscriber) will eventually timeout the outstanding transaction;
b) generate a return message indicating an error, which for SCCP signalling, might include TC-Abort, TC-Reject, TC-Error(System Failure), TC-Error(UnexpectedDataValue), TC-Error(UnknownSubscriber); and
c) generate an indication of success, without actually contacting the HPLMN, by returning for example an empty TC-result or other message as indicated by the message being refused.

Options (a) and (b) are likely to be interpreted by the mobile subscriber as a transmission error. This is a normal but relatively rare occurrence, so it may trigger a retry, or a continuous set of retry events. Choice of the error response may mitigate this. For instance, a timeout will at least impose a delay before the retry while the mobile subscriber awaits the expected response. Also, a TC-Error (UnexpectedDataValue) message is more likely to suppress a retry than responses such as TC-Abort, suggesting a short term congestion issue. The most powerful such response in preventing further messages is TC-Error (UnknownSubscriber), which a compliant mobile subscriber should interpret as a command to cease to all registration activity until power cycled.

Option (c) presents to the mobile subscriber a response as requested from the HPLMN 100, but which has been locally created. It may form the most useful response for specific abuse of some messages, such as InterrogateSS or ProcessUnstructuredSSData, by preventing their continued transmission.

Hence, it is likely that a mix of different responses may be used per message, per device type and per PLMN to reflect the best match of defence against unacceptable usage.

### Functionality 5

If the entities of the VPLMN 10 (such as MSC 34, SGSN 35 and MME 36) support the Automatic Device Detection (ADD) feature (specified in the 3GPP standards set), then the device IMEISV will be included in the UpdateLocation message and can be stored by the GLR 80. This can be used to identify the specific device in use by that roaming subscriber. A part of the IMEISV is the Type Approval Code (TAC) which identifies the device type.

The GLR 80 can thus impose a blacklist of devices which are considered unacceptable. Optionally, the GLR 80 can impose the blacklist for specific devices from one or more specific PLMNs. This may be because their behaviour compromises network stability, for example. Attempts by these devices to register in the VPLMN 10 can be rejected by the GLR 80.

Alternatively, the GLR 80 could permit a white list of devices, such as known smart-phones, which are exempt from the PLMN total visitor limit, or subject to a second and higher limit. This may preserve the roaming service of customers involving a human user, while still protecting the VPLMN 10 from excessive usage by M2M devices.

If the VLR 34 and/or SGSN 35 in the VPLMN 10 support the 3GPP Automatic Device Detection feature, then the IMEISV will be optionally included in the UpdateLocation and UpdateLocationGPRS messages, and the GLR can record the IMEISV being used by each inbound roamer as was shown above.

The combined operation mechanism for the GLR 80 to implement Functionalities 1, 2, 3, 4 and 4 is as follows.

```
 IF "Total Inbound Roamers" >= "Max Permitted Roamers"
 THEN
      Do not pass UpdateLocation or UpdateLocationGPRS to
      HLR, but reply directly to the VLR/SGSN with an error
      refusing the roaming request.
      ELSE
      IF WhiteListed(TAC,PLMN) AND "Inbound Roamers[PLMN]" >= "Max
      Personal Roamers[PLMN]"
      OR NOT WhiteListed(TAC,PLMN) AND "Inbound Roamers[PLMN]" >=
      "Max Permitted Roamers[PLMN]"
      THEN
      Do not pass UpdateLocation or UpdateLocationGPRS to
      HLR, but reply directly to the VLR/SGSN with an error
      refusing the roaming request.
      ELSE
      IF Maximum Message Rate[PLMN]" >= "Max Permitted Rate[PLMN]"
      THEN
      Discard message and do not onwards transmit or reply.
      ELSE
      Perform normal GLR operation as per 3GPP
      ENDIF
      IF BlackListed(TAC)
      OR BlackListed(TAC,PLMN)
      THEN
      Do not pass UpdateLocation or UpdateLocationGPRS to
      HLR, but reply directly to the VLR/SGSN with an Unknown
      Subscriber error refusing the roaming request and
      prevent retries.
      ELSE
      Perform normal GLR operation as per 3GPP
      ENDIF
```

### Functionality 6

Since the GLR 80 learns the hosting MSC 34, SGSN 35 and MME 36 of all inbound roaming devices, it can be used by the operator of the VPLMN 10 to perform any manual intervention. For example, this can include the termination of service of all subscribers from a specific HPLMN 100 or of all subscribers using a known unacceptable device type. In this way, the VPLMN 10 can manage any exceptional events requiring manual intervention concerning inbound roaming devices from a central place: the GLR 80. Thus the GLR 80 should offer capability to cancel registration information and terminate service by specific PLMN and/or TAC.

To effect this functionality, the GLR uses its database with the IMSI as primary index. A suitable database query can find an entry for a specific roaming subscriber by IMSI, or find entries for all roaming subscribers from a specific PLMN by using the MCC/MNC part of the IMSI. If the GLR maintains an index on the IMEISV in addition, then any specific roaming device, or set of devices using a specific TAC can be identified by a suitable query. By using a query for both index keys, all roaming subscribers from a specific PLMN using a specific TAC device can be found.

The GLR 80 can force removal of a roaming subscriber by generating a CancelLocation message to the relevant VLR 34 and/or SGSN 35. The 3GPP service ImmediateServiceTermination message could also be used. Hence the GLR 80, can generate signalling messages within the VPLMN in response to a database query triggered from a management interface, to remove an specified subset of roaming subscribers and/or devices.

### Functionality 7

The GLR 80 could limit the communication (e.g. block, throttle or cap usage) of specific messages between the roaming devices and the HPLMN 100. In particular, this may be done where the VPLMN thinks that the usage of the specific message is excessive or inappropriate to normal roaming purposes. One example of such a scenario is the use of messages such as "InterrogateSS" or "ProcessUnstructuredSSData" to provide a free communications path between the HPLMN 100 and the roaming MS, thereby circumventing roaming charges. Such messages do not normally incur billing events and they are rarely used for common services provided by the PLMN.

For each MCC/MNC combination, or per roaming device, a reasonable level of such messages could be allowed, but usage beyond this is blocked or throttle limited. This may additionally use awareness device type based on the IMEI, as discussed with respect to other functionalities above.

### Functionality 8

A VPLMN 10 will generate charging events in the VLR/MSC 34, SGSN, 35, MME 36, and S-GW 37 based upon usage, for example calls, SMS and data volume. This usage and associated roaming revenue does not normally align with the costs incurred by the VPLMN 10, in cases where the roaming devices are large in number and generate few chargeable events, as typified by M2M devices.

In principle, the existing entities could be modified to generate chargeable event records for other events, such as registration, or periodically for registered devices, or specific message usages such as those associated with Supplementary Services (SS) and Unstructured SS data (USSD) services. Such a change would be burdensome, as not only would all the existing network equipment of the VPLMN 10 need appropriate software changes, its primary billing system collecting all these event feeds would also require updating. The new events may also desirably exclude generation of chargeable events by the own subscribers of the PLMN, because the volume of events would be uneconomical to handle in that case.

Moreover, each VLR/MSC 34, SGSN 35, MME 36 and S-GW 37 have only an isolated view, as each typically covers only part of the VPLMN. Hence, a single MS moving from one VLR/MSC to another VLR/MSC would reset any counters or registers and lose any overall view of when the MS arrived in the VPLMN 10 and the total duration of its stay.

In contrast, the GLR 80 may be enhanced to determine a level of charging based on usage of the VPLMN 10 for MS devices for one or more specific HPLMN 10. The charging may be based on information only available at the GLR 80 and not available at the level of the individual MSC/VLR 34, SGSN 35, MME 36 or S-GW 37. For example, this could be based on the level of mobility of the MS terminals (static, highly mobile or typical human), Unstructured Supplementary Service Data (USSD) messages for terminals that the GLR has determined are M2M devices, a charge for terminals that have been registered continuously or near continuously greater than a threshold period (for instance, 4 weeks). This may allow the VPLMN 10 to generate billing events more aligned with the costs they have incurred.

This permits one central element to be upgraded to generate billing events upon such events, with all usage by the home subscribers of the PLMN automatically excluded. The event stream generated is separated from the mainstream billing events and hence can be reported upon and processed by a dedicated billing system adaptation.

The GLR 80 can generate new event reports which would be uneconomical to introduce to the main VPLMN 10 entities, such as billing for SS or USSD operations, or upon registration, or periodically for the duration of a visit.

Moreover, as the GLR 80 has a single view of the VPLMN 10 it can monitor the duration of the entire stay of a roaming MS, and perhaps factor in the duration or permanence to the new billing feed. Furthermore, the GLR 80 has a view over a plurality of subscribers, so the billing information may vary based upon the total numbers of visiting roaming MS from a particular HPLMN 100. If the GLR 80 can remember the IMSI of previous roamers that have since left the VPLMN 10, the billing could also vary based upon the history of previous visits. Where the GLR 80 has stored the device type or IMEI of the MS, this may also be used in the billing computation.

The billing information generated by the GLR 80 could be used directly to produce invoices for the extended roaming services being provided, or could be used for reporting and management information purposes to support commercial negotiations between the VPLMN 10 and other PLMN and ongoing monitoring of compliance.

### Variants

Although an embodiment of the invention has been described above, the skilled person will recognise that various modifications or adjustments can be made. For example, roaming UE devices discussed above have been limited to those with a SIM issued by a network operator in another country. The skilled person will understand that a UE device having a SIM with a non-geographic MCC will also be classified as a roaming UE device and the invention will be applicable to such devices as well. In particular, many devices with a SIM having a non-geographic MCC may be M2M devices. Consequently, the GLR 80 may be configured to select these devices based on their MCC/MNC combination, in accordance with the approach explained above.

More than one GLR server may be implemented, for example as a single logical GLR entity but using multiple, perhaps geographically-separated servers. Load balancing, fault tolerance or both may be provided internally. Several GLR servers may be provided, with roaming MS from a European HPLMN having entries on a first GLR server, while roaming MS from Asia or America use a second GLR server. These alternatives would have no effect on caps or message limiting (such as throttling) functionality provided for individual PLMN. However, this may make it more difficult to set an overall inbound roaming MS cap or message limiting.

The skilled person will appreciate that the functionality described above may be implemented in a network entity that does not have all of the functionality of an existing GLR. For the sake of convenience, this device is still termed a GLR herein. For example, the GLR may lack the proxy capability of an existing GLR. Instead, the GLR may pass the VLR 34, SGSN 35, MME 36 and HLR 120 traffic transparently and build the equivalent of an existing GLR database by observing these messages.

### Roaming and M2M Devices

As discussed above, the invention is especially applicable to problems caused by M2M device. A more detailed discussion of these problems is now provided.

It will be appreciated that the setup of a "roaming agreement" between cellular network operators involves considerable technical testing efforts, and much commercial and contract work. The roaming MS uses VPLMN infrastructure as they take up space in the databases of the VLR 34, SGSN 35 and MME 36 and may generate international signalling events. Furthermore, if the MS persistently keeps open a PS data session, even while exchanging no data over that session, then the VPLMN 10 will incur the software licence cost of a Simultaneously Attached User (SAU). Opening and closing sessions on demand is no better, as the signalling constraints of session establishment is frequently a driving cost of capacity. All of this costs the operator of the VPLMN 10 money to purchase and operate the requisite infrastructure and results in degradation of the infrastructure over time.

The VPLMN only receives some revenue compensation for their efforts if and when the roaming MS makes some chargeable event, which is typically user traffic. Mobile Telephony roaming has been, and remains very successful. However it is predicated upon 2 assumptions.
1. The number of inbound roamers within a VPLMN 10 is small, compared to the own customers of the VPLMN 10. The size of the network infrastructure needed is thus not greatly distorted by the need to support the roaming MS.
2. Each roaming MS generates on average, enough user traffic to generate a fair and equitable revenue for the effort expended by the VPLMN 10.

The potential usage of roaming M2M devices invalidate both these assumptions. M2M devices use the same capabilities as person to person communications, but the communication is characterised by its automatic nature between equipment. M2M devices are rapidly proliferating. Examples of M2M applications include:
1. Smart Metering: use of M2M to automate reading gas and electricity meters, enable remote control of supply, display to the consumers a real-time bill and/or tariff information.
2. Motor Vehicles: manufacturers are increasingly embedding M2M terminals in motor cars for telemetry and engineering purposes.
3. Smoke alarms: smoke detectors already exist containing a UE device and SIM. Upon detecting an alarm, they send a SMS to a defined set of destinations, for example the Fire Services.
4. Vending machines: these are increasingly having M2M devices embedded to report sales and stock levels.
5. Consumer devices, such as satellite navigation devices, eBooks, cameras, portable gaming consoles.

Two characteristics are apparent from even this short list of examples: a large volume; but a very small quantity of generated user traffic. For example, smart metering may generate a small report nightly, but over a year this is unlikely to exceed 1MByte total per meter.

Mobile roaming incurs significant cost for the VPLMN 10, only recouped by the user traffic generated, whereas M2M devices generate very little traffic. If a large number of M2M devices roam, the risks to the VPLMN 10 are very large.
1. The database capacity in the VLR 34, SGSN 35 and MME 36 is limited, by hardware and software licence constraints. If excessive numbers of roaming M2M devices fill those databases, there will be insufficient room for the subscribers of the VPLMN 10. They may suffer significant service disruptions including a possible breakdown of all Mobile Terminated calls.
2. The mobility, authentication and session establishment and termination signalling generated by the M2M devices will incur processing costs in the network elements and volume-related interconnect charges from the interconnect providers. The VPLMN 10 will thus need a larger network than they would otherwise need.
3. If the M2M devices keep open a data session long term, the VPLMN 10 will need additional SAU licences for their SGSN 34 and S-GW 37.
4. If the M2M devices behave in a way that causes problems for the network (for example by poor design), then they may launch a DDoS attack, emerging from the VPLMN 10.

A prudent VPLMN 10 therefore desirably deploys some defence mechanisms to preserve their network stability in particular. The improvements to the GLR provided by the invention allow such defence mechanisms to be effected.

## Claims

1. A Gateway Location Register, GLR, (80) for a Public Land Mobile Network, PLMN, (10) arranged to store information relating to each mobile subscriber roaming in the PLMN, the GLR being configured to receive a request from an associated visitor registration entity (34, 35) of the PLMN in respect of one Mobile subscriber and to perform an action based on the stored information relating to a plurality of Mobile subscribers in response to the received request;
wherein the GLR is further configured to perform the action when a number of mobile subscribers about which information is stored in the GLR is at least a threshold value; and
wherein the stored information relating to each Mobile subscriber comprises a device type identifier, wherein the GLR is further configured to determine the total number of Mobile subscribers: about which information is stored in the GLR; and for which a comparison between the stored device type identifier and one or more specified device types yields a specified result and wherein the action is performed when the determined total number of Mobile subscribers is at least the threshold value.

2. A Gateway Location Register, GLR, (80) for a Public Land Mobile Network, PLMN, (10) arranged to store information relating to each mobile subscriber roaming in the PLMN, the GLR being configured to select at least one mobile subscriber currently roaming in the PLMN and to perform an action for at least one selected Mobile subscriber, the selection being made on the basis of one or more of: the Home PLMN (100) for the mobile subscriber; the device type for the mobile subscriber; and one or more statistics relating to messages between a visitor registration entity of the PLMN associated with each mobile subscriber and the GLR;
wherein the action comprises sending a message to a visitor registration entity (34, 35) of the PLMN associated with each selected mobile subscriber or the action is performed in response to a request received from an associated visitor registration entity of the PLMN in respect of a selected mobile subscriber;
wherein the GLR is further configured to perform the action when a number of mobile subscribers about which information is stored in the GLR is at least a threshold value; and
wherein the stored information relating to each Mobile subscriber comprises a device type identifier, wherein the GLR is further configured to determine the total number of Mobile subscribers: about which information is stored in the GLR; and for which a comparison between the stored device type identifier and one or more specified device types yields a specified result and wherein the action is performed when the determined total number of Mobile subscribers is at least the threshold value.

3. The GLR of claim 2, further configured to perform the action in response to a request from an associated visitor registration entity of the PLMN, the action being performed based on the stored information relating to a plurality of Mobile subscribers.

4. The GLR of any preceding claim, wherein the GLR is further configured to determine the total number of mobile subscribers about which information is stored in the GLR from at least one other specific PLMN and wherein the action is performed when the determined total number of Mobile subscribers is at least the threshold value.

5. The GLR of claim 4, further configured to receive from the Home Location Register, HLR, of the PLMN, a number of Mobile subscribers from the PLMN that are roaming in the at least one other specific PLMN and to determine the threshold value on the basis of said number of Mobile subscribers from the PLMN that are roaming in the at least one other specific PLMN.

6. The GLR of any preceding claim, wherein the one or more specified device types comprise a Machine to Machine, M2M, or Machine Type Communication, MTC, device type.

7. The GLR of any preceding claim, wherein the action comprises sending an instruction to a visitor registration entity associated with a mobile subscriber.

8. The GLR of claim 7, wherein the request from the associated visitor registration entity comprises a request to update location information in respect of the one Mobile subscriber and wherein the instruction to the associated visitor registration entity comprises a message refusing the request.

9. The GLR of claim 7, when dependent upon claim 2, wherein the action comprises sending an instruction to the respective visitor registration entity associated with each selected Mobile subscriber, to deregister the respective Mobile subscriber.

10. The GLR of any preceding claim, wherein the action comprises limiting the transmission of signalling from the GLR.

11. The GLR of claim 10, wherein the limiting applies only to signalling comprising a specified message type.

12. The GLR of claim 10 or claim 11, wherein the limiting comprises one or more of: blocking signalling messages; capping the number of signalling messages that may be sent within a predetermined time period; and limiting the rate of transmission of signalling messages.

## Patentansprüche

1. Ein Gateway-Standortregister (Gateway Location Register, GLR) (80) eines öffentlichen terrestrischen Mobilfunknetzes (Public Land Mobile Network, PLMN) (10), derart ausgelegt, dass es Informationen im Zusammenhang mit jedem in dem PLMN wandernden mobilen Teilnehmer speichert, wobei das GLR so konfiguriert ist, dass es eine Anfrage von einer in Bezug auf einen mobilen Teilnehmer zugeordneten Besucherregistrierungseinheit (34, 35) des PLMN empfängt und als Antwort auf die empfangene Anfrage eine Aktion basierend auf den gespeicherten Informationen im Zusammenhang mit einer Vielzahl von mobilen Teilnehmern durchführt;
wobei das GLR weiter so konfiguriert ist, dass es die Aktion durchführt, wenn eine Anzahl mobiler Teilnehmer, über die Informationen in dem GLR gespeichert sind, zumindest einem Schwellenwert entspricht; und
wobei die gespeicherten Informationen im Zusammenhang mit jedem mobilen Teilnehmer eine Vorrichtungstypkennung umfassen, wobei das GLR weiter so konfiguriert ist, dass es die Gesamtanzahl mobiler Teilnehmer bestimmt: über die Informationen in dem GLR gespeichert sind; und für die ein Vergleich zwischen der gespeicherten Vorrichtungstypkennung und einem oder mehreren angegebenen Vorrichtungstypen ein angegebenes Ergebnis erzielt, und wobei die Aktion durchgeführt wird, wenn die bestimmte Gesamtanzahl mobiler Teilnehmer zumindest dem Schwellenwert entspricht.

2. Ein Gateway-Standortregister (Gateway Location Register, GLR) (80) eines öffentlichen terrestrischen Mobilfunknetzes (Public Land Mobile Network, PLMN) (10), derart ausgelegt, dass es Informationen im Zusammenhang mit jedem in dem PLMN wandernden mobilen Teilnehmer speichert, wobei das GLR so konfiguriert ist, dass es zumindest einen derzeit in dem PLMN wandernden mobilen Teilnehmer auswählt und eine Aktion für zumindest einen ausgewählten mobilen Teilnehmer durchführt, wobei die Auswahl basierend auf einem oder mehreren der folgenden erfolgt: dem Heim-PLMN (100) des mobilen Teilnehmers; dem Vorrichtungstyp des mobilen Teilnehmers; und einer oder mehreren Statistiken im Zusammenhang mit Nachrichten zwischen einer Besucherregistrierungseinheit des PLMN, die jedem mobilen Teilnehmer zugeordnet ist, und dem GLR;
wobei die Aktion umfasst, dass eine Nachricht an eine Besucherregistrierungseinheit (34, 35) des PLMN gesendet wird, die jedem ausgewählten mobilen Teilnehmer zugeordnet ist, oder dass die Aktion als Antwort auf eine Anfrage durchgeführt wird, die von einer in Bezug auf einen ausgewählten mobilen Teilnehmer zugeordneten Besucherregistrierungseinheit des PLMN empfangen wurde;
wobei das GLR weiter so konfiguriert ist, dass es die Aktion durchführt, wenn eine Anzahl mobiler Teilnehmer, über die Informationen in dem GLR gespeichert sind, zumindest einem Schwellenwert entspricht; und
wobei die gespeicherten Informationen im Zusammenhang mit jedem mobilen Teilnehmer eine Vorrichtungstypkennung umfassen, wobei das GLR weiter so konfiguriert ist, dass es die Gesamtanzahl mobiler Teilnehmer bestimmt: über die Informationen in dem GLR gespeichert sind; und für die ein Vergleich zwischen der gespeicherten Vorrichtungstypkennung und einem oder mehreren angegebenen Vorrichtungstypen ein angegebenes Ergebnis erzielt, und wobei die Aktion durchgeführt wird, wenn die bestimmte Gesamtanzahl mobiler Teilnehmer zumindest dem Schwellenwert entspricht.

3. Das GLR nach Anspruch 2, weiter so konfiguriert, dass es die Aktion als Antwort auf eine Anfrage von einer zugeordneten Besucherregistrierungseinheit des PLMN durchführt, wobei die Aktion basierend auf den gespeicherten Informationen im Zusammenhang mit einer Vielzahl von mobilen Teilnehmern durchgeführt wird.

4. Das GLR nach einem vorhergehenden Anspruch, wobei das GLR weiter so konfiguriert ist, dass es die Gesamtanzahl mobiler Teilnehmer, über die Informationen in dem GLR gespeichert sind, aus zumindest einem anderen spezifischen PLMN bestimmt, und wobei die Aktion durchgeführt wird, wenn die bestimmte Gesamtanzahl mobiler Teilnehmer zumindest dem Schwellenwert entspricht.

5. Das GLR nach Anspruch 4, weiter so konfiguriert, dass es eine Anzahl mobiler Teilnehmer aus dem PLMN, die in dem zumindest einen anderen spezifischen PLMN wandern, von dem Heimatstandortregister (Home Location Register, HLR) des PLMN empfängt und dass es den Schwellenwert basierend auf der genannten Anzahl mobiler Teilnehmer aus dem PLMN bestimmt, die in dem zumindest einen anderen spezifischen PLMN wandern.

6. Das GLR nach einem vorhergehenden Anspruch, wobei der eine oder die mehreren angegebenen Vorrichtungstypen einen Vorrichtungstyp Maschine-zu-Maschine (Machine to Machine, M2M) oder Maschinentypkommunikation (Machine Type Communication, MTC) umfassen.

7. Das GLR nach einem vorhergehenden Anspruch, wobei die Aktion das Senden einer Anweisung an eine Besucherregistrierungseinheit umfasst, die einem mobilen Teilnehmer zugeordnet ist.

8. Das GLR nach Anspruch 7, wobei die Anfrage von der zugeordneten Besucherregistrierungseinheit eine Anfrage zur Aktualisierung der Standortinformationen in Bezug auf den einen mobilen Teilnehmer umfasst und wobei die Anweisung an die zugeordnete Besucherregistrierungseinheit eine Nachricht mit der Ablehnung der Anfrage umfasst.

9. Das GLR nach Anspruch 7, soweit es von Anspruch 2 abhängig ist, wobei die Aktion das Senden einer Anweisung an die jeweilige Besucherregistrierungseinheit, die jedem ausgewählten mobilen Teilnehmer zugeordnet ist, zur Aufhebung der Registrierung des jeweiligen mobilen Teilnehmers umfasst.

10. Das GLR nach einem vorhergehenden Anspruch, wobei die Aktion die Einschränkung der Signalisierungsübertragung aus dem GLR umfasst.

11. Das GLR nach Anspruch 10, wobei die Einschränkung nur für die Signalisierung umfassend einen angegebenen Nachrichtentyp gilt.

12. Das GLR nach Anspruch 10 oder Anspruch 11, wobei die Einschränkung eine oder mehrere der folgenden umfasst: Blockieren von Signalisierungsnachrichten; Begrenzen der Anzahl an Signalisierungsnachrichten, die innerhalb eines zuvor bestimmten Zeitraums gesendet werden können; und Einschränken der Übertragungsrate von Signalisierungsnachrichten.

## Revendications

1. Un registre d'emplacement de passerelle, GLR, (80) destiné à un réseau mobile terrestre public, PLMN, (10) agencé de façon à conserver en mémoire des informations relatives à chaque abonné mobile en itinérance dans le PLMN, le GLR étant configuré de façon à recevoir une demande à partir d'une entité d'enregistrement de visiteurs associée (34, 35) du PLMN par rapport à un abonné mobile et à exécuter une action en fonction des informations conservées en mémoire relatives à une pluralité d'abonnés mobiles en réponse à la demande reçue,
où le GLR est configuré en outre de façon à exécuter l'action lorsqu'un nombre d'abonnés mobiles à propos desquels des informations sont conservées en mémoire dans le GLR est au moins une valeur seuil, et
où les informations conservées en mémoire relatives à chaque abonné mobile comprennent un identifiant de type de dispositif, où le GLR est configuré en outre de façon à déterminer le nombre total d'abonnés mobiles à propos desquels des informations sont conservées en mémoire dans le GLR et pour lesquels une comparaison entre l'identifiant de type de dispositif conservé en mémoire et un ou plusieurs types de dispositif spécifiés produit un résultat spécifié et où l'action est exécutée lorsque le nombre total déterminé d'abonnés mobiles est au moins la valeur seuil.

2. Un registre d'emplacement de passerelle, GLR, (80) destiné à un réseau mobile terrestre public, PLMN, (10) agencé de façon à conserver en mémoire des informations relatives à chaque abonné mobile en itinérance dans le PLMN, le GLR étant configuré de façon à sélectionner au moins un abonné mobile actuellement en itinérance dans le PLMN et à exécuter une action pour au moins un abonné mobile sélectionné, la sélection étant effectuée en fonction d'un ou de plusieurs éléments parmi : le PLMN de rattachement (100) pour l'abonné mobile, le type de dispositif pour l'abonné mobile et une ou plusieurs statistiques relatives à des messages entre une entité d'enregistrement de visiteurs du PLMN associée à chaque abonné mobile et le GLR,
où l'action comprend l'envoi d'un message à une entité d'enregistrement de visiteurs (34, 35) du PLMN associée à chaque abonné mobile sélectionné ou l'action est exécutée en réponse à une demande reçue à partir d'une entité d'enregistrement de visiteurs associée du PLMN par rapport à un abonné mobile sélectionné,
où le GLR est configuré en outre de façon à exécuter l'action lorsqu'un nombre d'abonnés mobiles à propos desquels des informations sont conservées en mémoire dans le GLR est au moins une valeur seuil, et
où les informations conservées en mémoire relatives à chaque abonné mobile comprennent un identifiant de type de dispositif, où le GLR est configuré en outre de façon à déterminer le nombre total d'abonnés mobiles à propos desquels des informations sont conservées en mémoire dans le GLR et pour lesquels une comparaison entre l'identifiant de type de dispositif conservé en mémoire et un ou plusieurs types de dispositif spécifiés produit un résultat spécifié et où l'action est exécutée lorsque le nombre total déterminé d'abonnés mobiles est au moins la valeur seuil.

3. Le GLR selon la Revendication 2, configuré en outre de façon à exécuter l'action en réponse à une demande à partir d'une entité d'enregistrement de visiteurs associée du PLMN, l'action étant exécutée en fonction des informations conservées en mémoire relatives à une pluralité d'abonnés mobiles.

4. Le GLR selon l'une quelconque des Revendications précédentes, où le GLR est configuré en outre de façon à déterminer le nombre total d'abonnés mobiles à propos desquels des informations sont conservées en mémoire dans le GLR à partir d'au moins un autre PLMN spécifique et où l'action est exécutée lorsque le nombre total déterminé d'abonnés mobiles est au moins la valeur seuil.

5. Le GLR selon la Revendication 4, configuré en outre de façon à recevoir à partir du registre de position de rattachement, HLR, du PLMN, un nombre d'abonnés mobiles du PLMN qui sont en itinérance dans le au moins un autre PLMN spécifique et à déterminer la valeur seuil en fonction dudit nombre d'abonnés mobiles du PLMN qui sont en itinérance dans le au moins un autre PLMN spécifique.

6. Le GLR selon l'une quelconque des Revendications précédentes, où les un ou plusieurs types de dispositif spécifiés comprennent un type de dispositif machine à machine, M2M, ou un type de dispositif de communication de type machine, MTC.

7. Le GLR selon l'une quelconque des Revendications précédentes, où l'action comprend l'envoi d'une instruction à une entité d'enregistrement de visiteurs associée à un abonné mobile.

8. Le GLR selon la Revendication 7, où la demande provenant de l'entité d'enregistrement de visiteurs associée comprend une demande d'actualisation d'informations de position par rapport audit abonné mobile et où l'instruction destinée à l'entité d'enregistrement de visiteurs associée comprend un message de refus de la demande.

9. Le GLR selon la Revendication 7, lorsqu'elle dépend de la Revendication 2, où l'action comprend l'envoi d'une instruction à l'entité d'enregistrement de visiteurs respective associée à chaque abonné mobile sélectionné de façon à désenregistrer l'abonné mobile respectif.

10. Le GLR selon l'une quelconque des Revendications précédentes, où l'action comprend la limitation de la transmission d'une signalisation à partir du GLR.

11. Le GLR selon la Revendication 10, où la limitation s'applique uniquement à une signalisation comprenant un type de message spécifié.

12. Le GLR selon la Revendication 10 ou 11, où la limitation comprend un ou plusieurs éléments parmi : le blocage de messages de signalisation, le plafonnement du nombre de messages de signalisation qui peuvent être envoyés à l'intérieur d'une période temporelle prédéterminée et la limitation du débit de transmission de messages de signalisation.
